# EUROPÄISCHE PATENTANMELDUNG

(11) **EP 2 902 609 A1**
(43) Veröffentlichungstag der Anmeldung: **05.08.2015**
(21) Anmeldenummer: 15153144.9
(22) Anmeldetag: 29.01.2015
(51) Int. Cl.: F02K 7/16, F02K 9/78

(54) **FLUGKÖRPER MIT TURBINE-VERDICHTER-EINHEIT**

(30) Priorität: 29.01.2014 DE 102014000991
(71) Anmelder: Bayern-Chemie Gesellschaft für flugchemische Antriebe mbH, 84544 Aschau am Inn (DE)
(72) Erfinder: Dr. Kurth, Guido, 83512 Wasserburg (DE); Bauer, Christoph, 85643 Steinhöring (DE)
(74) Vertreter: LS-MP von Puttkamer Berngruber Loth Spuhler

(57) **Zusammenfassung**

Flugkörper mit einem Strahltriebwerk (2), das wenigstens eine Turbine (3) und wenigstens einen Verdichter (4) umfasst, bei dem in wenigstens einem Gasgenerator (7) des Flugkörpers (1) erzeugtes Gas eine Turbine (3) antreibt. Der Verdichter (4) und die Turbine (3) sind entgegen der Flugrichtung (6) benachbart zueinander angeordnet.

## Beschreibung

Die Erfindung betrifft einen Flugkörper mit einem Strahltriebwerk, das wenigstens eine Turbine und wenigstens einen Verdichter umfasst, bei dem in wenigstens einem Gasgenerator des Flugkörpers erzeugtes Gas eine Turbine antreibt.

Aus der DE 29 437 30 C2 ist ein Staustrahltriebwerk, insbesondere ein Feststofftriebwerk bekannt, das einen Gasgenerator zur Erzeugung eines brennstoffreichen Heizgasstroms umfasst. Es ist weiter eine Brennkammer vorgesehen, in der das Heizgas unter Zugabe von Stauluft schuberzeugend verbrannt wird.

Der erfindungsgemäße Flugkörper stellt ein Antriebskonzept für taktische Flugkörper dar, das die Vorteile eines Turbostrahltriebwerks mit den Vorteilen eines Feststoffraketenmotors (SRM) verbindet, jedoch die mit den herkömmlichen Konzepten verbundenen Nachteile vermeidet.

Das erfindungsgemäße Konzept verbindet darüber hinaus die Vorteile eines Turbostrahltriebwerks mit den Vorteilen eines Feststoffstaustrahltriebwerks. Feststoffstaustrahltriebwerke werden z.B. bei METEOR - Flugkörpern als sogenannte regelbare Feststoffstaustrahltriebwerke (throttleable ducted rocket) (TDR) eingesetzt. Auch insoweit werden die Nachteile der herkömmlichen Konzepte vermieden.

SRM - angetriebene Flugkörper weisen nur eine sehr eingeschränkte Reichweite auf. Sie lassen einer sehr kurzen Beschleunigungsphase einen längeren ballistischen Gleitflug folgen. Auf Grund der sich während des Gleitflugs vermindernden Flug-Machzahl kommt es zu einer verminderten Manövrierfähigkeit.

Dieser Nachteil kann zumindest teilweise durch die Verwendung eines sogenannten Doppel- oder Zweipulstriebwerkes kompensiert werden. Das Anwendungsspektrum des SRM-Flugkörpers ist daher stark eingeschränkt. Es konzentriert sich auf kurz- bzw. mittelreichweitige Anwendungen mit sehr stark reduzierten Anforderungen an die Manövrierbarkeit. Die stark reduzierten Anforderungen betreffen ebenfalls den angetriebenen Marschflug, die Schubvarianten oder die Fähigkeit, längere Zeit im Luftraum abwartend kreisen zu können.

Turbinenbetriebene Triebwerke, sog. TJ-Triebwerke, haben mit den SRM - Triebwerken die gemeinsame Eigenschaft, bodenstartfähig zu sein. Sie weisen jedoch die Fähigkeit auf, bei einer sehr breiten Variation des Schubs langreichweitige Missionen abdecken zu können.

Im Gegensatz zum SRM - Triebwerk sind die TJ-Antriebssysteme jedoch sehr komplex aufgebaut und weisen ein höheres Gewicht auf.

Die Lagerfähigkeit des TJ - Triebwerks ist zudem eingeschränkt, da bei vollständig betankten Systemen im Rahmen einer erheblichen Lebensdauerforderung (Wartungsfreiheit über einen mehrjährigen Zeitraum) Leckagen im Tank- und Treibstofffördersystem auftreten können. Aus diesem Grund sind die Inspektions-bzw. Wartungsintervalle stark verkürzt.

Ein weiterer Nachteil des TJ - Triebwerks besteht darin, dass der Flugbetrieb sowie der Machzahlbereich auf den Unterschall- bzw. einen moderaten Überschallbetrieb eingeschränkt ist. Eine Umrüstung des Flugkörpers auf den höheren Überschallbereich wirkt sich negativ auf den Komplexitätsgrad des Antriebs aus.

Insbesondere bei starken Manövern, die sehr hohe Beschleunigungswerte erfordern kann es zum sogenannten Flame-Out-Effekt kommen, der zum Totalversagen des Triebwerks führen kann.

Sind höhere Flug-Machzahlen erforderlich, so kommen in der Regel lediglich Staustrahlantriebe infrage, wie z.B. Flüssigstauantriebe oder TDR-Systeme. Beide Antriebskonzepte weisen jedoch den Nachteil auf, dass sie erst bei Flug-Machzahlen um Mach 1.9 funktionsfähig und schubliefernd sind.

Beide Triebwerkstypen sind daher trotz einer hohen Schubregelbarkeit gerade für die neuen asymmetrisch konzeptionierten Szenarien unbrauchbar. Die beiden letztgenannten Antriebssysteme (Flüssigstautriebwerke und TDR-Systeme) verfügen nicht über die Fähigkeit, mit niedriger Fluggeschwindigkeit über oder in einem bestimmten (urbanen) Gebiet fliegen zu können.

Beide Antriebssysteme benötigen ein zusätzliches Starttriebwerk (Booster), um den Flugkörper auf die notwendige minimale operationelle Flug-Machzahl zu bringen. Der Flüssigstauantrieb kann auf Grund seiner physikalischen Rahmenbedingungen ähnlich wie der TJ - Antrieb bei anspruchsvollen Manövern ebenfalls zum Flame-Out-Effekt führen.

Die im Stand der Technik bekannten Triebwerksysteme erweisen sich ferner als nachteilhaft, da - sofern vorhanden - auf Grund der linearen Anordnung von Verdichter und Turbine, zwischen denen die Nachbrennkammer angeordnet ist, die Triebwerke der Flugkörper oft überproportional lang ausfallen. Die große Länge des Flugkörpers kann zu signifikanten Reichweiteeinbußen führen.

Die vielfach eingesetzten Radialverdichter erfordern eine technisch hoch komplexe Zuführung des Heißgases vom Gasgenerator zur Turbine. Die eingesetzten Gasleitrohre weisen mehrere Krümmer auf, die ausschließlich eine Verwendung von niederenergetischen partikelfreien Brenngasen möglich machen, was eine deutliche Leitungsverminderung nach sich zieht.

Mit der vorliegenden Erfindung sollen die vorerwähnten erheblichen Nachteile beseitigt werden.

Die Erfindung stellt sich ferner die Aufgabe, einen Flugkörper bereitzustellen, dessen Strahltriebwerk einen kompakten Aufbau aufweist. Eine weitere Aufgabe besteht darin, ein Strahltriebwerk so auszubilden, dass in dem Gasgenerator des Triebwerks hochenergetische partikelbeladene Festbrennstoffe zur Gaserzeugung eingesetzt werden können. Darüber hinaus liegt der Erfindung die Aufgabe zu Grunde, die Komplexität des Aufbaus des Strahltriebwerks zu reduzieren und dadurch gleichzeitig die Herstellungskosten senken zu können.

Die Aufgabe wird gelöst durch einen Flugkörper mit einem Strahltriebwerk, das wenigstens eine Turbine und wenigstens einen Verdichter umfasst, bei dem in wenigstens einem Gasgenerator des Flugkörpers erzeugtes Gas eine Turbine antreibt, wobei entgegen der Flugrichtung bzw. in Gasströmungsrichtung der Verdichter und die Turbine benachbart zueinander angeordnet sind.

Vorteilhafte Ausgestaltungen sind in den Unteransprüchen beschrieben.

Der erfindungsgemäße Flugkörper erweist sich als vorteilhaft, da er die Lagerfähigkeit und Wartungsfähigkeit des SRM - Antriebs erfüllt. Er kombiniert die Lagerfähigkeit und die Wartungsfähigkeit des SRM - Antriebs zusätzlich mit dem generellen thermodynamischen Kreisprozess eines TJ- bzw. eines TDR - Antriebs, der Art, dass eine Bodenstartfähigkeit des luftatmenden Systems ohne Zusatzbooster möglich ist. Zugleich kann ein weiterer Flug-Machzahlbereich auch bei hoher Manövrierfähigkeit beibehalten werden.

Der erfindungsgemäße Flugkörper bzw. das erfindungsgemäße Triebwerk erreicht dies durch eine kompakte Turboeinheit. Diese Turboeinheit ist im Gegensatz zur konventionellen Ausführung als Turbine-Verdichter-Einheit in paralleler Anordnung zwischen dem Gasgenerator und einem Gasleitrohr des TDR-Systems und der Nachbrennkammer positioniert.

In vorteilhafter Weise erzeugt der Gasgenerator unterbilanziertes Heizgas, das als Arbeitsmedium auf die Turbine aufgebracht wird. Die Turbine treibt dabei über eine Welle direkt die parallel angeordnete Verdichtereinheit an. Bewegliche Teile sind als separate Scheiben angeordnet, die sich zwischen Statoren befinden. Aufgrund der hohen Temperatur der Abgase aus dem Gasgenerator ist die Turbine so ausgebildet, dass die Turbinenblätter nicht auf einer zentralen Nabe angeordnet sind. Die Turbinenblätter sind vielmehr fest mit der Struktur verbunden, die das Turbinenlaufrad mit dem Verdichterlaufrad verbindet.

Auf diese Weise können hohe Fliehkräfte vermieden werden. Die Turbinenschaufeln müssen lediglich Druckkräfte aufnehmen.

Das im Gasgenerator des Flugkörpers erzeugte Heißgas wird einer Turbine zugeführt, in der die Strömungsenergie des Heizgases in eine Drehbewegung der Turbine umgesetzt wird. Die Turbine treibt den Verdichter sowie andere Aggregate, z. B. wenigstens einen Zusatzgenerator oder wenigstens eine Hydraulikpumpe an. Das Strahltriebwerk saugt Umgebungsluft an, die zur Druckerhöhung in den von der Turbine angetriebenen Verdichter geleitet und dort komprimiert wird. Die komprimierte Luft wird einer Nachbrennkammer zugeführt und darin Treibstoff, in der Regel Kerosin, eingespritzt. Zur Erzeugung des Antriebsschubs wird die Treibstoff-Luft-Mischung in der Nachbrennkammer verbrannt und zur Erzeugung des Rückstoßes der Schubdüse des Flugkörpers zugeleitet.

Erfindungsgemäß weist das Strahltriebwerk des Flugkörpers einen Gasgenerator auf, in dem Treibstoff, insbesondere ein Festtreibstoff in Antriebsgas umgewandelt wird, das die Turbine antreibt. Im Falle einer katalytischen Zersetzung des Treibstoffs liegt ein kalter oder kühler Antrieb vor.

Hiervon ist der heiße Antrieb zu unterscheiden, bei dem an Stelle der Zersetzung des Festtreibstoffs ein Teil des Treibstoffs zum Antrieb z. B. einer Turbopumpe verbrannt wird. Die Umwandlung von Festtreibstoff in Gas kann in einer Staubrennkammer erfolgen. Der Gasgenerator kann einen unterbilanzierten und/oder einen Boranteil aufweisenden Festtreibstoff umfassen, der im Gasgenerator zur Erzeugung einer partikelbeladenen Gasströmung verbrannt wird.

Die Brandgeschwindigkeit des Festtreibstoffes ist druckabhängig. Beispielhaft und in keiner Weise ausschließlich kann eine Verbrennungstemperatur T_{GG} von 1.500 bis 1.800 K vorliegen. Der Partikelanteil kann 60 % betragen, bei einem GG-Druck p_{GG} von 4 bis 90 bar.

Ein Gasleitrohr führt das im Gasgenerator erzeugte Gas der Turbine zu. Das Gasleitrohr ist vorzugsweise zentral im Flugkörper positioniert, so dass das Antriebsgas direkt auf die nachgeschaltete, in einem Turbinengehäuse angeordnete Turbine bläst, die vorzugsweise parallel mit dem Kompressor geschaltet und vorzugsweise fest mit diesem verbunden ist.

An Stelle eines Gasleitrohrs kann auch eine andere technische Einrichtung eingesetzt werden, die die Funktion der Zuführung des erzeugten Gases zur Turbine erfüllt.

Eine Turbine-Verdichter-Einheit (Turbo-Einheit) ist zweistufig ausgebildet und umfasst die Turbine und den Verdichter. In der Turbine-Verdichter-Einheit ist eine Antriebswelle vorgesehen, über die die Turbine, die durch das erzeugte Gas in Rotation um die eigene Achse versetzt ist den Verdichter antreibt. Die Energieübertragung von der Turbine auf den Verdichter erfolgt durch einen Impuls, so dass keine signifikante Druckreduktion entsteht. Durch den Druck und die Geschwindigkeit des durch das Gasleitrohr strömenden Heißgases wird ein Impuls auf die Schaufeln der Turbine ausgeübt. Durch den Impuls entsteht ein Drehmoment an einer Welle, die z.B. zum Antrieb eines Verdichters genutzt werden kann.

Durch die Antriebsverbindung der Turbine mit dem Verdichter in der Turbine-Verdichter-Einheit liegt eine zweistufige Verdichtung der zugeführten Luft mittels eines Axialverdichters vor. Die Zweistufigkeit der Turbine-Verdichter-Einheit erklärt sich damit, dass vom Heißgas des Gasgenerators zuerst das mindestens eine Laufrad der Turbine angetrieben wird. Entgegen der Flugrichtung wird dahinter in einer zweiten Stufe das mindestens eine Laufrad des Verdichters angetrieben. Dazwischen liegen Gehäusezwischenwände, die sich nicht drehen. Das Gas ändert beim Durchlaufen die Richtung, um beim nächsten Laufrad wieder optimal Arbeit zu verrichten. Turbinen mit mehreren Laufrädern werden mehrstufig genannt. Mehrstufige Turbinen können kegelförmig ausgebildet sein.

Die zweistufige Form der Turbine-Verdichter-Einheit ist nur beispielhaft und in keiner Weise ausschließlich gemeint. Insbesondere bei kleineren Strahltriebwerken kann der Verdichter/ Kompressor z.B. alternativ auch als einstufiger Radialverdichter ausgebildet sein.

Es ist vorstellbar, dass auch ein Verdichter/Kompressor mehrere Verdichterstufen umfasst. Hierbei sind Laufräder, die mehrere Kompressorschaufeln aufweisen, axial hinter einander angeordnet. Gleiches ist entsprechend auf eine Turbine mit mehreren Turbinenschaufeln anwendbar.

Die Drehzahlübertragung von der Turbine auf den Verdichter wird indirekt über den Gasmassenstrom oder direkt über eine verstellbare Düse geregelt. Zur Zuführung der Luft zum Verdichter umfasst die Turbine-Verdichter-Einheit an der Außenseite des Flugkörpers einen Lufteinlauf, der gegenüber dem Gehäuse des Flugkörpers einen ringförmigen Spalt aufweist.

Die Turbine-Verdichter-Einheit ist in einem Turbinengehäuse angeordnet, das die Turbine und den Verdichter umfasst. Das Turbinengehäuse weist wenigstens eine Gehäusewand auf, die die Turbine und den Verdichter umgibt. Zusätzliche Gehäusezwischenwände bewirken eine radiale Unterteilung des Turbinengehäuses in einen Bereich, der die Turbine aufnimmt und einen weiteren Bereich, in dem der Verdichter angeordnet ist.

Das erfindungsgemäße Strahltriebwerk wirkt sich äußerst vorteilhaft auf die kompakte Bauweise des Flugkörpers aus, da das Gehäuse der Turbine-Verdichter-Einheit sowohl die Turbine als auch den Verdichter vorzugsweise in einem gemeinsamen Gehäuse aufnimmt und umgibt. Der bisher erforderliche Platz für das jeweils zusätzliche separate Turbinen- bzw. Verdichtergehäuse wird frei und kann anderweitig genutzt werden.

In Strömungsrichtung hinter dem Gasgenerator und dem Gasleitrohr ist die Turbine im Turbinengehäuse angeordnet. Die Turbine wird durch das aus dem Gasgenerator in das Gasleitrohr eintretenden Heißgas in Rotation um die eigene Achse versetzt und auf diese Weise angetrieben.

Die Turbine treibt über eine Welle den Verdichter an. Es ist darüber hinaus vorstellbar, dass das Strahltriebwerk zwei oder mehr Turbinen aufweist, die durch wenigstens eine Welle einen mehrstufigen Verdichter antreiben.

Bei Einstrom-Triebwerken ist der größte Teil der kinetischen Energie aus dem im Gasgenerator erzeugten Gas für den Rückstoß des Flugkörpers nutzbar.

Es wird vorzugsweise nur so viel Energie auf die Turbine übertragen, wie für den Betrieb des Verdichters erforderlich ist.

Der Verdichter umfasst einen zweistufigen Axialkompressor, der die vom Lufteinlauf bereitgestellte Luft in einem außenliegenden ringförmigen Spalt komprimiert. Die auf einer zentralen Nabe angeordnete Turbine wird vom Heißgasstrahl des Gasgenerators angetrieben und treibt ihrerseits den Kompressor an. Damit liegt entgegen einem konventionellen Turbotriebwerksdesign keine Rückwirkung des Kompressorbetriebspunktes auf die Turbine vor. Dies führt zu einer unmittelbaren Schuberzeugung durch die in der Staubrennkammer stattfindende Nachverbrennung.

Im Weiteren wird rein beispielhaft und nicht ausschließlich von der Verwendung einer einzigen Turbine ausgegangen, die im Turbinengehäuse angeordnet ist und dem Gasleitrohr nachgeschaltet ist.

Die Turbine und der Verdichter sind parallel geschaltet Die Turbine und der Verdichter sind parallel angeordnet.

Die Turbine treibt den parallel zur Turbine angeordneten Verdichter vorzugsweise direkt an. Hierzu sind die beweglichen Teile der Turbine als separate Scheiben ausgeführt, die sich zwischen Statoren des Turbinengehäuses befinden.

Wegen der extrem hohen Temperatur der im Gasgenerator erzeugten Heißgase sind die Turbinenblätter vorzugsweise nicht auf einer zentralen Nabe angeordnet, sondern fest mit einer Struktur verbunden, mit der wenigstens ein Turbinenlaufrad mit wenigstens einem Laufrad des Verdichters verbunden ist. Die Turbinenschaufeln nehmen im Wesentlichen lediglich Druckkräfte auf, so dass eine Beschädigung durch die auf die Turbinenschaufeln wirkenden Fliehkräfte vermieden wird. Das vom Gasgenerator zugeführte Heißgas expandiert in der Turbine.

Die Turbine und der Verdichter bilden vorzugsweise eine räumliche Turbine-Verdichter-Einheit, die vorzugsweise in dem Turbinengehäuse angeordnet ist. Zur Bildung der Turbine-Verdichter-Einheit sind die Turbine und der Verdichter vorzugsweise und besonders vorzugsweise unmittelbar benachbart zu einander angeordnet. Insoweit ist jede konstruktiv - geometrische Ausgestaltung denkbar. Insbesondere kann die Turbine entgegen der Flugrichtung axial vor dem Verdichter angeordnet sein. Es ist auch vorstellbar, dass der Verdichter entgegen der Flugrichtung vor der Turbine positioniert ist. Hierdurch erstrecken sich Turbine und Verdichter parallel zu einander.

Die Energie zum Antrieb der Turbine-Verdichter-Einheit wird vorzugsweise ausschließlich aus der kinetischen Energie des Heißgases gewonnen, die nur ca. 2% des Gesamtenergiegehaltes des Heißgases ausmacht, welcher erst in der Nachbrennkammer chemisch umgesetzt wird.

Je nach Größe und Umfang des Flugkörpers kann die Turbine-Verdichter-Einheit im vorderen Bereich oder im rückwärtigen Bereich des Flugkörpers angeordnet sein. Es ist auch vorstellbar, die Turbine-Verdichter-Einheit zentral etwa im mittleren Bereich des Flugkörpers anzuordnen.

Innerhalb der Turbine-Verdichter-Einheit sind die Turbine und der Verdichter auf einer gemeinsamen Antriebswelle angeordnet.

Der Verdichter kann beispielhaft und nicht ausschließlich ein Kompressor sein.

Der Verdichter führt der zugeführten Außenluft kinetische Energie zu, die in Druckenergie umgewandelt wird.

Der Verdichter erhält Außenluft von einem Überschall-Luft-Einlauf und komprimiert die ihm zugeführte Luft in Abhängigkeit von der Rotationsgeschwindigkeit der Welle, die von der Turbine auf den Verdichter/ Kompressor übertragen wird.

Es ist Aufgabe des Verdichters, der Nachbrennkammer verdichtete Außenluft zuzuführen. Dabei erhält der Verdichter Luft, die bereits im Lufteinlauf vorverdichtet worden ist. Der Totaldruck der bereits im Lufteinlauf vorverdichteten Luft wird im Verdichter weiter erhöht.

Durch Zuleitung vorkomprimierter Luft zum Verdichter wird die physikalische Stabilität des Verdichters zusätzlich erhöht. Die Menge an Brennstoff, die der Nachbrennkammer zugeführt werden kann, steigt mit der Zunahme des Drucks der in der Nachbrennkammer befindlichen komprimierten Luft. Daher resultiert die Zuführung von vorverdichteter Luft in einer verbesserten Schubbandbreite und somit in einem breiteren Treibstoffinjektionsspektrum.

Insbesondere bei hohen Geschwindigkeiten kommt dem Lufteinlauf eine wichtige Funktion zu. Die einströmende Luft staut sich an Luftleitblechen im Inneren des Lufteinlaufs und wird dadurch abgebremst und vorverdichtet. Dies ist insbesondere im Überschallflug notwendig, da die in den Lufteinlauf einströmende Luft vor Eintritt in den Verdichter auf Unterschallgeschwindigkeit herunter gebremst werden muss. Würde die vorverdichtete Luft mit Überschallgeschwindigkeit in den Verdichter eindringen, so könnte es zu Beschädigungen im Inneren des Verdichters sowie an den Kompressorschaufeln kommen.

Bei der vorliegenden Erfindung erfolgt die Verdichtung der Luft entkoppelt von der Turbine im Wesentlichen mit Hilfe des Verdichters. Die Turbine selbst wird durch das Gas angetrieben, das im Gasgenerator erzeugt wird. Daraus folgt, dass das Strahltriebwerk des Flugkörpers in wesentlich kürzerer Zeit hochgefahren werden kann, als dies bei Strahltriebwerken aus dem Stand der Technik möglich ist, bei denen die Turbine durch Gas angetrieben wird, das in der Nachbrennkammer erzeugt wird. Komplexe Interdependenzen und Rückkopplungen zwischen der Turbine und dem Verdichter können entfallen.

Es ist ein Lufteinlauf vorgesehen, der dem Kompressor Außenluft zuführt. Der Lufteinlauf ist in Bezug auf den Flugkörper nach vorne geöffnet. Der Lufteinlauf wirkt dabei als Diffusor zur Umsetzung der kinetischen Energie der anströmenden Luft zur Erhöhung des Drucks und der Temperatur der zugeführten Luft.

Der Lufteinlauf ist im Bereich der Mittelsektion des Flugkörpers angeordnet und bewirkt eine Vorverdichtung der zugeführten Außenluft durch externe Kompression. Die vorverdichtete Luft wird dem Verdichter/ Kompressor zugeführt, der die Luft weiter verdichtet. Die doppelt verdichtete Luft wird der Nachbrennkammer zugeführt und dort zur Erzeugung des für den Rückstoß des Flugkörpers erforderlichen Schubs mit Treibstoff versetzt und entzündet.

Die Menge des zum Antrieb der Turbine erforderlichen Heißgases (Gasmassenstrom) ist durch ein Ventil im Eingang des Gasleitrohrs steuerbar. Auf diese Weise ist die Leistung der Turbine je nach Bedarf an erforderlichem Schubs regelbar. Mit der Steuerung der Leistung der Turbine sind - ungeachtet der erwähnten Entkoppelung der Verdichtung der Luft - gleichfalls die Leistung des Verdichters und damit der Druck in der Nachbrennkammer regelbar. Der Druck in der Nachbrennkammer bestimmt die Treibstoffmenge, die in die Nachbrennkammer eingeführt werden kann. Somit kann der Schub des Flugkörpers gezielt gesteuert werden.

Der Lufteinlauf ist am Raketengehäuse im Bereich des Gasgenerators und/oder des Gasleitrohrs angeordnet. Eine Anordnung des Lufteinlaufs kann jedoch auch im vorderen oder hinteren Bereich des Flugkörpers vorgesehen sein.

Der Lufteinlauf bildet im Bereich seiner Öffnung gegenüber der Außenwand des Flugkörpers einen Spalt. Der Spalt kann sich ringförmig um die gesamte Außenkontur des Flugkörpers erstrecken oder nur Bereiche der Außenkontur des Flugkörpers betreffen.

In der Nachbrennkammer wird der zugeführten Außenluft, die durch die Verdichtung im Verdichter/ Kompressor stark erhitzt ist, Kraftstoff zugeführt. Der Kraftstoff wird zum Beispiel beim Start durch Zündkerzen gezündet. Die weitergehende Verbrennung erfolgt kontinuierlich.

Die exotherme Reaktion des Sauerstoff-Kohlenwasserstoff-Gemisches führt zu einem weiteren Temperaturanstieg und zur Ausdehnung der Verbrennungsgase. In der Nachbrennkammer wird das expandierte Treibstoffgas von der Turbine kommend mit komprimierter Luft aus dem Verdichter zusammengeführt und zur Explosion gebracht.

Unterbilanziertes Treibstoffgas, dem komprimierte Außenluft zugeführt wird, kann vollständig verbrennen.

Der in der Nachbrennkammer vorherrschende Druck kann über eine verstellbare Plugdüse geregelt werden. Beispielhaft und in keiner Weise ausschließlich kann die Verbrennungstemperatur einen Wert von 2.500 k bei einem Druck von 4 bis 15 bar annehmen.

Das erfindungsgemäße Strahltriebwerk erweist sich als besonders vorteilhaft, da bis zu dem Zeitpunkt, an dem der im Gasgenerator befindliche Treibstoff vollständig aufgebraucht ist, ein versehentliches Verlöschen der Flamme nahezu ausgeschlossen ist.

Die räumliche Zusammenführung der Turbine mit dem Verdichter erhöht die Dynamik der Turbine-Verdichter-Einheit, was in einer wesentlich schnelleren Hochlaufzeit des Strahltriebwerks resultiert.

Die optimierte Raumausnutzung des zur Verfügung stehenden Bauraums im Flugkörper durch die Zusammenführung von Turbine und Verdichter in der Turbine-Verdichter-Einheit führt zu freiwerdendem Bauraum. Dieser Bauraum kann z.B. zur Erzeugung elektrischer Energie herangezogen werden, was sich wiederum in einer weiteren Gewichtsreduktion des gesamten Flugkörpers bemerkbar macht.

Da das erfindungsgemäße Strahltriebwerk direkt vom Zeitpunkt der Zündung des Gasgenerators an Schub bereitstellen kann, verfügt der Flugkörper über eine verbesserte Bodenstartfähigkeit. Zusätzlich können bereits in der Bodenstartphase Flug-Machzahlen zwischen 0.3 und 2.2 erreicht werden. Dem gegenüber können bei erfindungsgemäßen Flugkörpern, die vom Flugzeug aus gestartet werden, Mach-Zahlen in einer Größenordnung von über 3 erreicht werden.

Ein weiterer Vorteil liegt darin, dass das Strahltriebwerk sehr gut regelbar ist und die mit ihm erzielbaren Schubverläufe aufeinander folgende Beschleunigungs- und Verzögerungsphasen ermöglichen, wodurch auch "Warteschleifen" für asymmetrische Szenarien im Flugbereich möglich sind.

Weitere Vorteile bestehen darin, dass die parallele Anordnung vor Turbine und Verdichter/Kompressor eine außerordentlich kompakte Bauweise ermöglicht. Eine zusätzliche Verlängerung des Bauraumbedarfs des Triebwerks ist nicht erforderlich.

Hochenergetische, partikelbeladene Festbrennstoffe können im Gasgenerator zur Gaserzeugung eingesetzt werden, was zu einer bedeutenden Erhöhung des Leistungsniveaus in Bezug auf die Reichweite sowie die Schuberzeugung führt.

Gleichzeitig kann die Komplexität des Triebwerkdesigns erheblich vereinfacht werden.

Bei einer ganz besonders vorteilhaften Ausführungsform sind Turbine und Kompressor ebenfalls als Einheit ausgestaltet. Die Turbine und der Kompressor befinden sich dabei in einer Parallelanordnung, d.h. dass das Heißgas, das aus dem Gasgenerator strömt, die Turbinenschaufel anbläst.

Dabei ist die Turbinenschaufel mit dem Kompressor kraftschlüssig verbunden.

Die Verbindung zwischen Turbinenschaufel und Kompressor erfolgt bevorzugt über einen Laufring.

Die Anordnung von Turbine und Kompressor ist dabei ebenfalls benachbart bevorzugt, im wesentlichen jedoch zueinander quer zur Flugrichtung des Flugkörpers.

Dies hat den Vorteil, dass man zu einer noch kürzeren Bauweise gelangt, die neben einer signifikanten Gewichtseinsparung in besonderem Maße eine Volumeneinsparung nach sich zieht. Dies stellen bei Flugkörpern extrem wichtige Apsekte dar.

Die aktiv antreibende Verbrennung oder Temperaturerhöhung erfolgt erst nach dem Durchgang durch Turbine und Kompressor.

Diese noch kürzere Bauweise erlaubt es, eine Ausgestaltung der Einheit aus Turbine und Kompressor vorzusehen, bei der der Kompressor die über den Lufteinlauf aufgefangene Luft in einem Vedichtungsverhältnis von zwei zu dessen Luftinhalt verdichtet.

Bei dieser Bauweise können also zwei Turbinen und zwei Kompressoren in axialer Richtung hintereinander angeordnet sein. Diese Ausgestaltung ist dann vorteilhaft, wenn ein Kompressionsverhältnis von zwei realisiert werden muss, weil eine einzelne Kompressorstufe, die nicht optimiert ist, ein solches Kompressionsverhältnis nicht ermöglicht, vielmehr lediglich ein Kompressionsverhältnis von etwa 1,4 realisiert. In diesem Fall ist es angezeigt, zwei Kompressoren hintereinander zu schalten, um den Druckerhöhungsfaktor von etwa zwei realisieren zu können.

Bei dieser letztgenannten Ausgestaltung ist ein weiterer Aspekt, dass die beiden dann unabhängig voneinander operierenden Stufen gegenläufig sind, um dann einen ausgeglichenen Momentenhaushalt zu realisieren.

Im Übrigen gelten die weiteren zur ersten Ausführungsform beschriebenen Eigenschaften auch für diese weitere Ausführungsform.

Weitere Ausführungsformen und Beispiele werden anhand der Zeichnung näher erläutert. Dabei zeigen jeweils schematisch:
Fig. 1 im Längsschnitt den Flugkörper mit Gasgenerator, Turbine-Verdichter-Einheit und Nachbrennkammer und
Fig. 2 in einem Ausschnitt aus Fig. 1 die Turbine-Verdichter-Einheit.
Fig. 3 in einem Ausschnitt aus Fig. 1 die Turbine-Verdichter-Einheit ein einer Parallelanordnung.

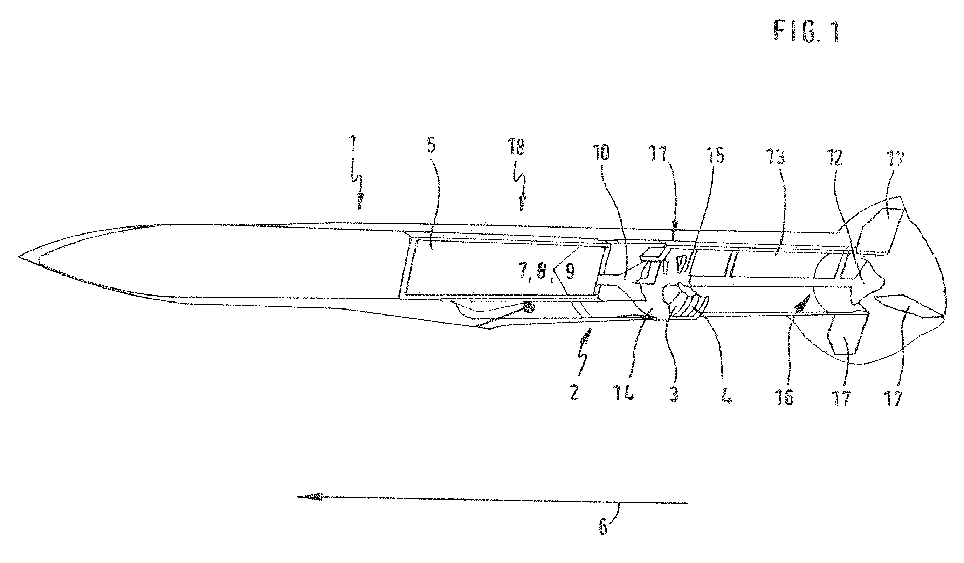

Fig. 1 zeigt in schematischer Darstellung einen Flugkörper 1 mit Strahltriebwerk 2 , das eine Turbine 3 und einen Verdichter 4 in Form eines Kompressors aufweist. Im vorderen Bereich des Flugkörpers 1 sind (nicht dargestellt) weitere Aggregate wie z. B. eine Sprengeinrichtung, Überwachungseinrichtungen, Sensoren, Kameras etc. untergebracht.

Entgegen der Flugrichtung 6 des Flugkörpers 1 ist hinter dem vorderen Bereich 5 ein Gasgenerator 7 dargestellt, der Festtreibstoff 8 aufweist. Am hinteren Ende des Gasgenerators 7 ragt ein Zünder 9 in den Festtreibstoff 8 hinein. Anschließend an den Gasgenerator 7 erstreckt sich entgegen der Flugrichtung 6 hinter dem Gasgenerator 7 ein Gasleitrohr 10 sowie eine Turbine-Verdichter-Einheit 11.

Zwischen der Turbine-Verdichter-Einheit 11 und einer Düse 12 des Flugkörpers 1 ist eine Nachbrennkammer 13 angeordnet.

Das Gasleitrohr 10 ist trichterförmig ausgebildet, wobei sich sein Durchmesser entgegen der Flugrichtung 6 in Richtung zur Turbine 3 hin aufweitet.

Die Turbine-Verdichter-Einheit 11 sitzt in einem Gehäuse 14 , das die Turbine 3 und den Verdichter 4 umfasst.

In axialer Verlängerung einer Antriebswelle 15 , auf der die Turbine 3 und der Verdichter 4 angeordnet sind, sitzt die Düse 12 im hinteren Bereich 16 des Flugkörpers 1 . Im Bereich der Düse 12 sind stabilisierende Leitbleche 17 angeordnet. In der Nachbrennkammer 13 wird der im Kompressor 4 verdichteten und erhitzten Luft Kraftstoff zugeführt und das Gemisch zur Explosion gebracht, wodurch Verbrennungsgas entsteht, das durch die Düse 12 den Flugkörper 1 verlässt und den Vortrieb des Flugkörpers 1 bewirkt.

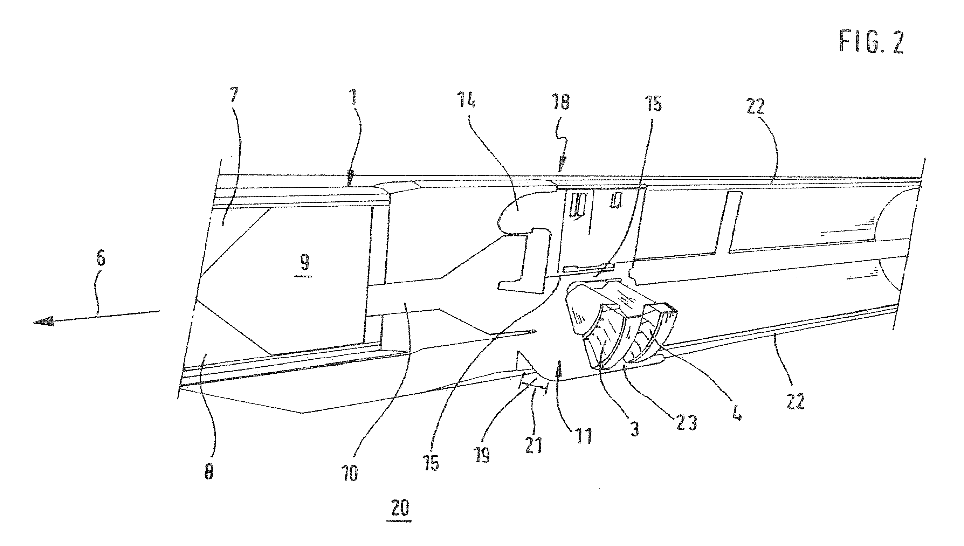

Fig. 2 zeigt als Ausschnitt der Fig. 1 einen zentralen Bereich 18 des Flugkörpers 1 mit der Turbine-Verdichter-Einheit 11. Die Turbine-Verdichter-Einheit 11 umfasst das Gehäuse 14 und die Antriebswelle 15, auf der axial hintereinander und benachbart zueinander die Turbine 3 und der Verdichter/ Kompressor 4 angeordnet sind. Zusätzliche Gehäusezwischenwände 23 bewirken eine radiale Unterteilung des Gehäuses 14 in einen Bereich, der die Turbine 3 aufnimmt und einen weiteren Bereich, in dem der Verdichter 4 angeordnet ist.

Der Festtreibstoff 8 wird im Gasgenerator 7 durch den Zünder 9 gezündet. Das daraus entstehende Verbrennungsgas wird durch das Gasleitrohr 10 der Turbine 3 zugeführt, die im Gehäuse 14 der Turbine-Verdichter-Einheit 11 angeordnet ist.

Das durch das Gasleitrohr 10 geführte Verbrennungsgas setzt die Turbine 3 in Rotation um die Antriebswelle 15, die durch das Zentrum der Turbine 3 verläuft. Die benachbart zum Verdichter 4 angeordnete Turbine 3 treibt den Verdichter/Kompressor 4 an und bewirkt eine Rotation des Kompressors 4 um die Antriebswelle 15.

Durch einen Lufteinlauf 19 wird Außenluft 20 dem Verdichter/ Kompressor 4 zugeführt und von diesem verdichtet.

Die verdichtete Außenluft 20 wird in der Nachbrennkammer 13 mit Kraftstoff (nicht gezeigt) zusammengeführt und zur Explosion gebracht.

Im Gehäuse 14 der Turbine-Verdichter-Einheit 11 sind die Turbine 3 und der Verdichter/ Kompressor 4 in Bezug zur Flugrichtung 6 axial hintereinander angeordnet.

Die Turbine 3 und der Kompressor 4 erstrecken sich im Gehäuse 14 der Turbine-Verdichter-Einheit 11 parallel zueinander.

Zwischen dem Lufteinlauf 19 und der Außenhülle 22 des Flugkörpers 1 ist ein Spalt 21 vorgesehen, durch den Außenluft 20 in den Lufteinlauf 19 eindringt, um dem Kompressor 4 zugeführt zu werden.

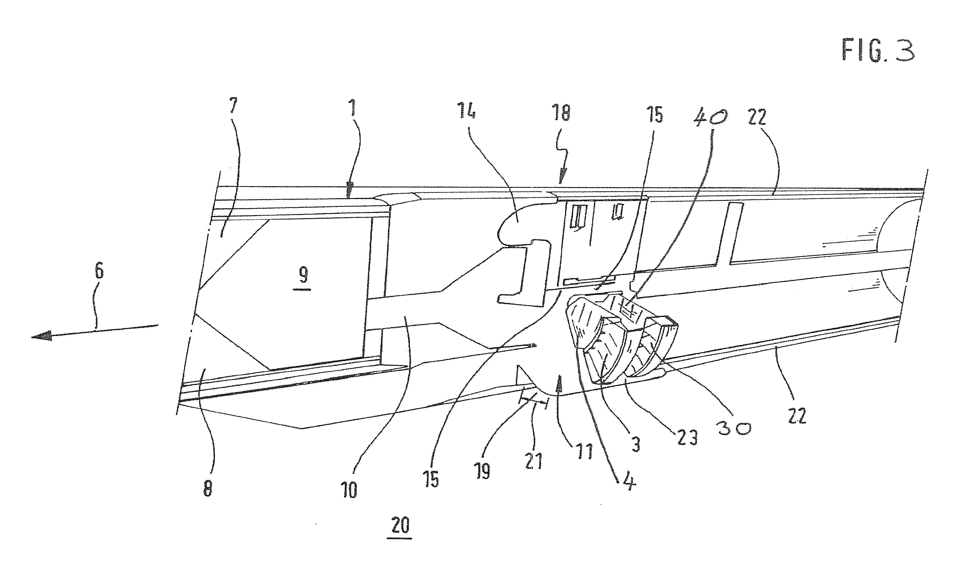

Fig. 3 zeigt als Ausschnitt der Fig. 1 eine Parallelanordnung der Turbine-Verdichter-Einheit 11. Die Turbine 3 ist mit dem Verdichter/Kompressor 4 verbunden. Die Verbindung ist kraftschlüssig ausgestaltet. Die Verbindung erfolgt dabei über einen Laufring. Es liegt eine Parallelanordnung vor.

In einer hierzu parallelen Anordnung der Turbine-Verdichter-Einheit ist eine Turbine 30 und ein Verdichter/Kompressor 40 angeordnet.

Die Turbine 3, 30 und der Verdichter/Kompressor 4, 40 sind benachbart und im Wesentlichen quer zur Flugrichtung des Flugkörpers jeweils miteinander verbunden, wobei die Parallelanordnung der Turbine 30 und des Verdichters/Kompressors 40 axial hintereinander zu der Turbine 3 und dem Verdichter/Kompressor 4 angeordnet ist.

Diese besonders raumsparende und besonders bevorzugte benachbarte Anordnung von Turbine 3 und Verdichter/Kompressor 4 erlaubt mithin eine Ausgestaltung derart, dass der Kompressor die über den Lufteinlauf aufgefangene Luft mit einem Verdichtungsverhältnis von zwei für dessen Luftinhalt verdichtet und dann einer Nachreaktion zuführt. Diese Anordnung erlaubt es, wie in der Ausgestaltung gemäß Fig. 3 dargestellt, zwei Kompressoren einzusetzen, um den gewünschten Druckerhöhungsfaktor von zwei realisieren zu können, der bei einer einzelnen Kompressionsstufe, die nicht optimiert ist, regelmäßig nicht erreicht wird. Durch die beiden dann unabhängig voneinander operierenden Stufen erfolgt eine gegenläufige Anordnung, um einen ausgeglichenen Momentenhaushalt zu realisieren.

Die übrigen Bauteile dieser Ausgestaltung entsprechen derjenigen der Fig. 2.

### Bezugsziffern

- 1: Flugkörper
- 2: Strahltriebwerk
- 3: Turbine
- 4: Kompressor
- 5: vorderer Bereich
- 6: Flugrichtung
- 7: Gasgenerator
- 8: Festtreibstoff
- 9: Zünder
- 10: Gasleitrohr
- 11: Turbine-Verdichter-Einheit
- 12: Düse
- 13: Nachbrennkammer
- 14: Gehäuse
- 15: Antriebswelle
- 16: hinterer Bereich
- 17: stabilisierendes Leitblech
- 18: zentraler Bereich
- 19: Lufteinlauf
- 20: Außenluft
- 21: Spalt
- 22: Außenhülle des Flugkörpers
- 23: Gehäusezwischenwand
- 30: Turbine
- 40: Kompressor

## Patentansprüche

1. Flugkörper mit einem Strahltriebwerk (2), das wenigstens eine Turbine (3) und wenigstens einen Verdichter (4) umfasst, bei dem in wenigstens einem Gasgenerator (7) des Flugkörpers (1) erzeugtes Gas wenigstens eine Turbine (3) antreibt, **dadurch gekennzeichnet, dass** der Verdichter (4) und die Turbine (3) benachbart zueinander angeordnet sind.

2. Flugkörper nach Anspruch 1 **dadurch gekennzeichnet, dass** entgegen der Flugrichtung (6) die Turbine (3) axial vor dem Verdichter (4) angeordnet ist.

3. Flugkörper nach Anspruch 1, **dadurch gekennzeichnet, dass** entgegen der Flugrichtung (6) der Verdichter (4) axial vor der Turbine (3) angeordnet ist.

4. Flugkörper nach Anspruch 1, **dadurch gekennzeichnet, dass** die Turbine (3) mit dem Verdichter (4) verbunden ist.

5. Flugkörper nach Anspruch 4, **dadurch gekennzeichnet, dass** die Turbine (3) mit dem Verdichter (4) kraftschlüssig verbunden ist und im wesentlichen quer zur Flugrichtung angeordnet ist.

6. Flugkörper nach Anspruch 1, 4 oder 5, **dadurch gekennzeichnet, dass** eine Turbine (30) und ein Verdichter (40) parallel zu der Turbine (3) und zu dem Verdichter (4) angeordnet sind.

7. Flugkörper nach einem oder mehreren der vorhergehenden Ansprüche 1 bis 6, **dadurch gekennzeichnet, dass** die Turbine (3) und der Verdichter (4) eine räumliche Turbine-Verdichter-Einheit (11) bilden und in einem gemeinsamen Gehäuse (14) angeordnet sind.

8. Flugkörper nach Anspruch 7 , **dadurch gekennzeichnet, dass** die Turbine-Verdichter-Einheit (11) im vorderen Bereich (5) oder im rückwärtigen Bereich (16) oder zentral (18) im Flugkörper (1) angeordnet ist.

9. Flugkörper nach einem oder mehreren der vorhergehenden Ansprüche 1 bis 8, **dadurch gekennzeichnet, dass** der Verdichter (4) ein Kompressor ist.

10. Flugkörper nach einem oder mehreren der vorhergehenden Ansprüche 1 bis 9, **dadurch gekennzeichnet, dass** die Turbine (3) und der Verdichter (4) auf einer gemeinsamen Welle (15) angeordnet sind.

11. Flugkörper nach einem oder mehreren der vorhergehenden Ansprüche 1 bis 10, **dadurch gekennzeichnet, dass** zur Zuführung des Gases der Turbine (3) ein Gasleitrohr (10) vorgeschaltet ist.

12. Flugkörper nach einem oder mehreren der vorhergehenden Ansprüche 1 bis 11, **dadurch gekennzeichnet, dass** zur Zuführung von Außenluft (20) dem Verdichter (4) ein Lufteinlauf (19) vorgeschaltet ist.

13. Flugkörper nach Anspruch 12, **dadurch gekennzeichnet, dass** der Lufteinlauf (19) im Bereich des Gasgenerators (7) und/oder des Gasleitrohrs (10) seitlich am Flugkörper (1) angeordnet ist.

14. Flugkörper nach wenigstens einem der Ansprüche 12 und 13 , **dadurch gekennzeichnet, dass** zwischen dem Lufteinlauf (19) und dem Flugkörper (1) ein Spalt verläuft.
